# EUROPEAN PATENT SPECIFICATION

(11) **EP 3 645 669 B1**
(45) Date of publication and mention of the grant of the patent: **27.03.2024**
(21) Application number: 18823699.6
(22) Date of filing: 26.06.2018
(51) Int. Cl.: C10G 35/06, C10G 35/09, C10G 59/02, B01J 23/656, B01J 23/62, B01J 27/13, B01J 27/135, B01J 27/138

(54) **REFORMING PROCESS EMPLOYING A CATALYST SYSTEM WITH FRONT CATALYST ZONES CONTAINING HIGHER LEVELS OF ALKALI**
REFORMIERUNGSVERFAHREN UNTER VERWENDUNG EINES KATALYSATORSYSTEMS MIT FRONTKATALYSATORZONEN MIT HÖHEREN ALKALISPIEGELN
PROCÉDÉ DE REFORMAGE UTILISANT UN SYSTÈME DE CATALYSEUR COMPRENANT DES ZONES DE CATALYSEUR AVANT CONTENANT DES NIVEAUX SUPÉRIEURS D'ALCALI

(30) Priority: 29.06.2017 US 201762526943 P
(43) Date of publication of application: 06.05.2020
(73) Proprietor: UOP LLC, Des Plaines, Illinois 60017-5017 (US)
(72) Inventor: LAFYATIS, David S., Des Plaines, Illinois 60017-5017 (US); MARR, Gary A., Des Plaines, Illinois 60017-5017 (US); GLOVER, Bryan K., Des Plaines, Illinois 60017-5017 (US)
(74) Representative: Boult Wade Tennant LLP
(86) International application number: PCT/US2018/039462
(87) International publication number: WO 2019/005770

(56) References cited:
- EP-A1- 0 121 735
- WO-A1-2015/126705
- US-A- 4 722 780
- US-A- 4 929 332
- US-A- 5 858 205
- US-A- 5 968 345

## Description

### STATEMENT OF PRIORITY

This application claims priority from U.S. Application No. 62/526,943 filed June 29, 2017.

### BACKGROUND OF THE INVENTION

This invention relates to an improved process for the conversion of hydrocarbons, and more specifically for the catalytic reforming of gasoline-range hydrocarbons.

The catalytic reforming of hydrocarbon feedstocks in the gasoline range is an important commercial process, practiced in nearly every significant petroleum refinery in the world to produce aromatic intermediates for the petrochemical industry or gasoline components with high resistance to engine knock. The demands of high-performance internal-combustion engines are increasing the need for gasoline "octane", or knock resistance of the gasoline component. The catalytic reforming unit must operate at higher severities in order to meet these increased octane needs. This trend creates a need for more effective reforming catalysts and catalyst combinations.

The multi-functional catalyst composite employed in catalytic reforming contains a metallic hydrogenation-dehydrogenation component on a porous, inorganic oxide support which provides acid sites for cracking and isomerization. Catalyst composites comprising platinum on highly purified alumina are particularly well known in the art. Those of ordinary skill in the art are also aware of metallic modifiers, such as rhenium, iridium, tin, and germanium which improve product yields or catalyst life in platinum-catalyst reforming operations.

The composition of the catalyst, feedstock properties, and selected operating conditions affect the relative importance and sequence of the principal reactions: dehydrogenation of naphthenes to aromatics, dehydrocyclization of paraffins, isomerization of paraffins and naphthenes, hydrocracking of paraffins to light hydrocarbons, and formation of coke which is deposited on the catalyst. Naphthene dehydrogenation takes place principally in the first catalyst zones, while dehydrocyclization is largely accomplished in later catalyst zones. High yields of desired gasoline-range products are favored by the dehydrogenation dehydrocyclization and isomerization reactions.

The performance of catalysts employed in the catalytic reforming of naphtha range hydrocarbons is measured principally by three parameters.

Activity is a measure of the ability of the catalyst to convert hydrocarbon reactants to products at a designated severity level, with severity level representing a combination of reaction conditions: temperature, pressure, contact time, and hydrogen partial pressure. Activity typically is designated as the octane number of the pentanes and heavies ("C₅⁺") product stream from a given feedstock at a given severity level, or conversely as the temperature required to achieve a given octane number. Selectivity refers to the yield of petrochemical aromatics or C₅⁺ product from a given feedstock at a particular activity level. Stability refers to the rate of change of activity or selectivity per unit of time or of feedstock processed. Activity stability generally is measured as the rate of change of operating temperature per unit of time or of feedstock to achieve a given C₅⁺ product octane, with a lower rate of temperature change corresponding to better activity stability, since catalytic reforming units typically operate at relatively constant product octane. Selectivity stability is measured as the rate of decrease of C₅⁺ product or aromatics yield per unit of time or of feedstock.

Higher catalyst activity is required to meet the need for high octane gasoline components at reasonable operating conditions, and improved catalyst selectivity becomes more important as higher operating severities reduce the yield of desired product.

Higher operating severities also accelerate the deactivation of the catalyst. The principal cause of deactivation of a dual-function catalyst in a catalytic reforming operation is the aforementioned formation of coke on the surface of the catalyst. Alternative approaches to reactivation of the catalyst are well known to those skilled in the art. Regeneration of the catalyst may be carried out during a periodic shutdown of the unit, i.e., a "semiregenerative" operation, or by isolation and regeneration of individual reactors, i.e., a "swing-reactor" or "cyclic" system. In a "continuation" operation, catalyst is withdrawn by means of a slowly moving bed, regenerated, reactivated, and returned to the reactors. The "hybrid" system is a combination of regeneration techniques, in which a reactor associated with continuous catalyst regeneration is added to an existing fixed-bed system. The reactants may contact the catalyst in individual reactors in either upflow, downflow, or radial flow fashion, with the radial flow mode being preferred. The present invention involves a semiregenerative process,

US 4 929 332 A and US 4 722 780 A disclose a process for the catalytic reforming of hydrocarbons.

The problem facing workers in this area of the art, therefore, is to develop catalyst systems with improved activity, selectivity, and stability for a variety of feedstocks, product requirements, and reactor systems. This problem has become more challenging due to the aforementioned increase in required catalytic reforming severity. Multi-catalyst-zone systems, in which different catalyst composites are employed in the sequential zones of the reactor system, are of increasing interest as a solution to the problem. The activity, selectivity, and stability characteristics of individual catalyst composites are complementary to the specific reactions occurring in the different zones of the multi-zone system.

### SUMMARY OF THE INVENTION

This invention is based on the discovery that a multi-catalyst-zone reforming process employing an initial zone having a catalytic composition comprising platinum, rhenium or germanium or a combination of rhenium and germanium, an alkali metal or an alkaline earth metal and halogen on a solid catalyst support and a terminal zone having a terminal catalytic composition having the essential absence of an alkali metal or an alkaline earth metal and comprising platinum, rhenium or germanium or a combination of rhenium and germanium, and a halogen on a solid catalyst support demonstrates surprising yield improvements over a single-catalyst system. The catalyst compositions in the initial and terminal zones may include a metal promoter such as tin. In some embodiments of the invention, there will be a catalyst zone or multiple catalyst zones in between these two zones with an intermediate level of an alkali metal or an alkaline earth metal. The use of the alkali metal or alkaline earth metal in the catalyst in both the initial and terminal zones has been found to substantially increase the production of C5+ hydrocarbons by 0.9 to 1.7% but the activity is decreased such as by 4-5°C. A combination of catalyst zones with higher yield and lower activity with catalyst zones having a lower yield and higher activity is accomplished with the present invention.

The invention is directed to a process for the catalytic reforming of hydrocarbons as defined in the appended claims.

### DETAILED DESCRIPTION OF THE INVENTION

To reiterate briefly, one embodiment of the present invention is directed toward the catalytic reforming of a hydrocarbon feedstock by: (a) reacting the feedstock and hydrogen in an initial catalyst zone with an initial catalytic composite comprising platinum, rhenium, germanium or a mixture of rhenium and germanium, an alkali metal or an alkaline earth metal, a refractory inorganic oxide, and a halogen, wherein said catalyst composition of alkaline metal or alkaline earth metal in said initial catalyst zone comprises 150 to 5000 ppm potassium; and (b) further reacting the resultant effluent in a terminal catalyst zone with a terminal catalytic composite having the essential absence of potassium and comprising platinum, rhenium, germanium or a mixture of rhenium and germanium, a refractory inorganic oxide, and a halogen, wherein said terminal catalyst composition comprises less than 100 ppm alkali metal on an elemental basis.

The catalytic reforming process is well known in the art. The hydrocarbon feedstock and a hydrogen-rich gas are preheated and charged to a reforming zone containing typically two to five reactors in series. Suitable heating means are provided between reactors to compensate for the net endothermic heat of reaction in each of the reactors.

The individual initial and terminal catalyst zones respectively containing the initial and terminal catalytic composites are typically located in separate reactors, although it is possible that the catalyst zones could be separate beds in a single reactor. Each catalyst zone may be located in two or more reactors with suitable heating means provided between reactors as described hereinabove, for example with the initial catalyst zone located in the first reactor and the terminal catalyst zone in three subsequent reactors. The segregated catalyst zones also may be separated by any one or more reaction zones containing a catalyst composite having a different composition from either of the catalyst composites of the present invention.

The initial catalyst zone may be divided into first and intermediate catalyst zones containing, respectively, first and intermediate catalytic composites having different compositions. The first and intermediate catalyst zones are typically located in different reactors, although it is possible that the catalyst zones could be separate beds in a single reactor. Each of the first and intermediate catalyst zones may be located in two or more reactors with suitable heating means provided between reactors as described hereinabove. Generally, the intermediate catalytic composite will be formulated to mitigate coke formation and catalyst deactivation. It is specifically contemplated, without limiting the present invention, that the intermediate catalytic composite will contain a metal promoter known to those of ordinary skill in the art to inhibit coke formation and deactivation. Such promoters include, for example, rhenium, rhodium, ruthenium, cobalt, nickel, and iridium. Typically the promoter is rhenium.

The reactants may contact the catalyst in individual reactors in either upflow, downflow, or radial flow fashion, with the radial flow mode being preferred. The catalyst is contained in a fixed-bed system or a moving-bed system with associated continuous catalyst regeneration. The preferred embodiment of the current invention is a fixed-bed system. Alternative approaches to reactivation of the catalyst are well known to those skilled in the art.

Semiregenerative: The entire unit is operated to maintain activity by gradually increasing temperature to maintain product octane number, finally shutting the unit down for catalyst regeneration and reactivation. Swing reactor or Cyclic: Individual reactors are individually isolated by manifolding arrangements as the contained catalyst becomes deactivated, and the catalyst in the isolated reactor is regenerated and reactivated while the other reactors remain on-stream. Continuous: Catalyst is continuously withdrawn from the reactors by means of a slowly moving bed, and the catalyst is regenerated and reactivated before being returned to the reactors. This system permits higher operating severity and maintains high catalyst activity by reactivating each catalyst particle over a period of a few days. Hybrid: Semiregenerative and continuous reactors are contained in the same unit. Usually this is effected by adding a continuous reactor to an existing semiregenerative process unit to provide for higher severity operation with improved selectivity. The preferred embodiment of the current invention is a "semiregenerative" or "swing-reactor" or "cyclic" system; these may be incorporated into a "hybrid" system.

Effluent from the reforming zone is passed through a cooling means to a separation zone, typically maintained at 0° to 65°C, wherein a hydrogen-rich gas is separated from a liquid stream commonly called "unstabilized reformate". The resultant hydrogen stream can then be recycled through suitable compressing means back to the reforming zone. The liquid phase from the separation zone is typically withdrawn and processed in a fractioning system in order to adjust the butane concentration, thereby controlling front end volatility of the resulting reformate.

Feedstock: The hydrocarbon feed stream that is charged to this reforming system will comprise naphthenes and paraffins that boil within the gasoline range. The preferred charge stocks are naphthas consisting principally of naphthenes and paraffins, although, in many cases, aromatics also will be present. This preferred class includes straight-run gasolines, natural gasolines, synthetic gasolines, and the like. As an alternative embodiment, it is frequently advantageous to charge thermally or catalytically cracked gasolines or partially reformed naphthas. Mixtures of straight-run and cracked gasoline-range naphthas can also be used to advantage. The gasoline-range naphtha charge stock may be a full-boiling gasoline having an initial boiling point of from 40° to 70°C, and an end boiling point within the range of from 16° to 220°C, or may be a selected fraction thereof which generally will be a higher-boiling fraction commonly referred to as a heavy naphtha-for example, a naphtha boiling in the range of 100° to 200°C. In some cases, it is also advantageous to charge pure hydrocarbons or mixtures of hydrocarbons that have been recovered from extraction units-for example, raffinates from aromatics extraction or straight-chain paraffins-which are to be converted to aromatics.

It is preferred practice to use the present invention in a substantially sulfur-free environment. Any control means known in the art may be used to treat the hydrocarbon feedstock which is to be charged to the reforming reaction zone. For example, the feedstock may be subjected to adsorption processes, catalytic processes, or combinations thereof. Adsorption processes may employ molecular sieves, high surface area silica-aluminas, carbon molecular sieves, crystalline aluminosilicates, activated carbons, high surface area metallic containing compositions, such as, nickel or copper, and the like. It is preferred that these charge stocks be treated by conventional catalytic pretreatment methods such as hydrorefining, hydrotreating, hydrodesulfurization, etc., to remove substantially all sulfurous, nitrogenous and water-yielding contaminants therefrom, and to saturate any olefins that may be contained therein. Catalytic processes may employ traditional sulfur reducing catalyst formulations known to the art including refractory inorganic oxide supports containing metals selected from the group comprising Group VI-B, Group II-B, and Group VIII of the Periodic Table (see Cotton and Wilkinson, ADVANCED INORGANIC CHEMISTRY, (3rd Ed., 1972)).

Operating conditions used for the reforming process of the present invention include a pressure selected within the range of 100 to 7000 kPa (abs), with the preferred pressure being 350 kPa to 4250 kPa (abs). Particularly good results are obtained at low pressure, namely a pressure of 350 to 2500 kPa. Reforming conditions include a temperature in the range from 315° to 600°C and preferably from 425° to 565°C. As is well known to those skilled in the reforming art, the initial selection of the temperature within this broad range is made primarily as a function of the desired octane of the product reformate considering the characteristics of the charge stock and of the catalyst. Ordinarily, the temperature then is thereafter slowly increased during the run to compensate for the inevitable deactivation that occurs to provide a constant octane product.

The reforming conditions in the present invention also typically include sufficient hydrogen to provide an amount of 1 to 20 moles of hydrogen per mole of hydrocarbon feed entering the reforming zone, with excellent results being obtained when 2 to 10 moles of hydrogen are used per mole of hydrocarbon feed. Likewise, the liquid hourly space velocity (LHSV) used in reforming is selected from the range of 0.1 to 10 hr⁻¹, with a value in the range of 1 to 5 hr⁻¹ being preferred.

Catalyst Support: The present invention as reviewed relates to a multi-catalyst-zone process for the catalytic reforming of hydrocarbons in which the initial catalytic composite comprises platinum, rhenium, germanium or a mixture of rhenium and germanium , an alkali metal or an alkaline earth metal and halogen on a solid catalyst support and the terminal catalytic composite has the essential absence of any alkali metal or alkaline earth metal and comprises platinum, halogen and rhenium, germanium or a mixture of rhenium and germanium on a solid catalyst support. Each of the catalysts required in the process of this invention employs a porous carrier material or support having combined therewith catalytically effective amounts of the required metals and a halogen component.

Considering first the refractory support utilized in the present invention, it is preferred that the material be a porous, adsorptive, high-surface area support having a surface area of 25 to 500 m²/g. The porous carrier material should also be uniform in composition and relatively refractory to the conditions utilized in the hydrocarbon conversion process. By the term "uniform in composition", it is meant that the support be unlayered, has no concentration gradients of the species inherent to its composition, and is completely homogeneous in composition. Thus, if the support is a mixture of two or more refractory materials, the relative amounts of these materials will be constant and uniform throughout the entire support. It is intended to include within the scope of the present invention carrier materials which have traditionally been utilized in dual-function hydrocarbon conversion catalysts such as: (1) refractory inorganic oxides such as alumina, titanium oxide, zirconium dioxide, chromium oxide, zinc oxide, magnesia, thoria, boria, silica-alumina, silica-magnesia, chromia-alumina, alumina-boria, silica-zirconia, etc.; (2) ceramics, porcelain, bauxite; (3) silica or silica gel, silicon carbide, clays and silicates including those synthetically prepared and naturally occurring, which may or may not be acid treated, for example attapulgus clay, diatomaceous earth, fuller's earth, kaolin, kieselguhr, etc.; (4) crystalline zeolitic aluminosilicates, such as naturally occurring or synthetically prepared mordenite and/or faujasite, either in the hydrogen form or in the form which has been treated with multivalent cations; and (5) combinations of one or more elements from one or more of these groups.

The preferred refractory inorganic oxide for use in the present invention is alumina. Suitable alumina materials are the crystalline aluminas known as the gamma-, eta-, and theta-alumina, with gamma- or eta-alumina giving best results. The preferred refractory inorganic oxide will have an apparent bulk density of 0.3 to 1.01 g/cc and surface area characteristics such that the average pore diameter is 20 to 300 angstroms, the pore volume is 0.1 to 1 cc/g, and the surface area is 100 to 500 m²/g.

Although alumina is the preferred refractory inorganic oxide, a particularly preferred alumina is that which has been characterized in U.S. Pat. Nos. 3,852,190 and 4,012,313 as a by-product from a Ziegler higher alcohol synthesis reaction as described in Ziegler's U.S. Pat. No. 2,892,858. For purposes of simplification, such as alumina will be hereinafter referred to as a "Ziegler alumina". Ziegler alumina is presently available from the Vista Chemical Company under the trademark "Catapal" or from Condea Chemie GMBH under the trademark "Pural." This material is an extremely high purity pseudoboehmite which, after calcination at a high temperature, has been shown to yield a high purity gamma-alumina. This alumina powder may be formed into a material according to any of the techniques known to those skilled in the catalyst carrier material forming art. Spherical carrier material particles may be formed, for example, from this Ziegler alumina by: (1) converting the alumina powder into an alumina sol by reaction with a suitable peptizing acid and water and thereafter dropping a mixture of the resulting sol and a gelling agent into an oil bath to form spherical particles of an alumina gel which are easily converted to a gamma-alumina carrier material by known methods: (2) forming an extrudate from the powder by established methods and thereafter rolling the extrudate particles on a spinning disk until spherical particles are formed which can then be dried and calcined to form the desired particles of spherical carrier material; and (3) wetting the powder with a suitable peptizing agent and thereafter rolling the particles of the powder into spherical masses of the desired size. This alumina powder can also be formed in any other desired shape or type of carrier material known to those skilled in the art such as rods, pills, pellets, tablets, granules, extrudates, and like forms by methods well known to the practitioners of the catalyst material forming art. The preferred type of carrier material for the present invention is a cylindrical extrudate generally having a diameter of 0.8 to 3.2 mm (especially 1.6 mm) and a length to diameter ratio of 1:1 to 5:1, with 2:1 being especially preferred.

Catalyst Metals: One essential ingredient of the initial and the terminal catalytic composites is a dispersed platinum component. This platinum component may exist within the final catalytic composite as a compound such as an oxide, sulfide, halide, oxyhalide, etc., in chemical combination with one or more of the other ingredients of the composite or as an elemental metal. Best results are obtained when substantially all of this component is present in the elemental state and it is uniformly dispersed within the carrier material. This component may be present in the final catalyst composite in any amount which is catalytically effective, but relatively small amounts are preferred. In fact, the platinum component generally will comprise 0.01 to 2 mass% of the final catalytic composite, calculated on an elemental basis. Excellent results are obtained when the catalyst contains 0.05 to 1 mass% of platinum.

This platinum component may be incorporated into the catalytic composite in any suitable manner, such as coprecipitation or cogelation, ion exchange, or impregnation, in order to effect a uniform dispersion of the platinum component within the carrier material. The preferred method of preparing the catalyst involves the utilization of a soluble, decomposable compound of platinum to impregnate the carrier material. For example, this component may be added to the support by commingling the latter with an aqueous solution of chloroplatinic acid. Other water-soluble compounds of platinum may be employed in impregnation solutions and include ammonium chloroplatinate, bromoplatinic acid, platinum dichloride, platinum tetrachloride hydrate, platinum dichlorocarbonyl dichloride, dinitrodiaminoplatinum, etc. The utilization of a platinum chloride compound, such as chloroplatinic acid, is preferred since it facilitates the incorporation of both the platinum component and at least a minor quantity of the halogen component in a single step. Best results are obtained in the preferred impregnation step if the platinum compound yields complex anions containing platinum in acidic aqueous solutions. Hydrogen chloride or the like acid is also generally added to the impregnation solution in order to further facilitate the incorporation of the halogen component and the distribution of the metallic component. In addition, it is generally preferred to impregnate the carrier material after it has been calcined in order to minimize the risk of washing away the valuable platinum compounds; however, in some cases, it may be advantageous to impregnate the carrier material when it is in a gelled state.

A second essential constituent of the initial and terminal catalytic composite is a germanium or rhenium component or a combination of the two. This component may in general be present in the composite in any catalytically available form such as the elemental metal, a compound such as the oxide, hydroxide, halide, oxyhalide, aluminate, or in chemical combination with one or more of the other ingredients of the catalyst. Although it is not intended to restrict the present invention by this explanation, it is believed that best results are obtained when the germanium or rhenium component is present in the composite in a form wherein substantially all of the moiety is in an oxidation state above that of the elemental metal such as in the form of rhenium and/or germanium oxide or oxyhalide or halide or in a mixture thereof and the subsequently described oxidation and reduction steps that are preferably used in the preparation of the instant catalytic composite are specifically designed to achieve this end The term "rhenium and/or germanium oxyhalide" as used herein refers to a coordinated complex of rhenium and/or germanium, oxygen, and halogen which are not necessarily present in the same relationship for all cases covered herein. This component can be used in any amount which is catalytically effective, with good results obtained, on an elemental basis, with 0.05 to 5 mass% rhenium and/or germanium in the catalyst. Best results are ordinarily achieved with 0.01 to 1 mass% , calculated on an elemental basis. The preferred atomic ratio of rhenium and germanium to platinum group metal for this catalyst is 0:1:1 to 20:1.

This germanium or rhenium component or combination thereof is preferably incorporated in the catalytic composite in any suitable manner known to the art to result in a relatively uniform dispersion of the rhenium and/or germanium moiety in the carrier material, such as by coprecipitation or cogelation, or coextrusion with the porous carrier material, ion exchange with the gelled carrier material, or impregnation of the porous carrier material either after, before, or during the period when it is dried and calcined. Methods which result in non-uniform rhenium and/or germanium distribution are within the scope of the present invention. It is intended to include within the scope of the present invention all conventional methods for incorporating and simultaneously distributing a metallic component in a catalytic composite in a desired manner, and the particular method of incorporation used is not deemed to be an essential feature of the present invention. One method of incorporating the rhenium and/or germanium component into the catalytic composite involves cogelling or coprecipitating the component in the form of the corresponding hydrous oxide or oxyhalide during the preparation of the preferred carrier material, alumina. This method typically involves the addition of a suitable sol-soluble of sol-dispersible rhenium and/or germanium compound such as a tetrachloride, an oxide, and the like to the alumina hydrosol and then combining the rhenium and/or germanium-containing hydrosol with a suitable gelling agent and dropping the resulting mixture into an oil bath, etc., as explained in detail hereinbefore. Alternatively, the rhenium and/or germanium compound can be added to the gelling agent. After drying the calcining the resulting gelled carrier material in air, there is obtained an intimate combination of alumina and germanium oxide and/or oxychloride. One preferred method of incorporating the rhenium and/or germanium component into the catalytic composite involves utilization of a soluble, decomposable compound of germanium to impregnate the porous carrier material. In general, the solvent used in this impregnation step is selected on the basis of the capability to dissolve the desired compound and to hold it in solution until it is evenly distributed throughout the carrier material without adversely affecting the carrier material or the other ingredients of the catalyst-for example, a suitable alcohol, ether, acid, and the like solvents. One preferred solvent is an aqueous, acidic solution. Thus, the rhenium and/or germanium component may be added to the carrier material by commingling the latter with an aqueous acidic solution of suitable rhenium and/or germanium salt, complex, or compound such as an oxide, a tetrachloride, a tetraethoxide, a difluoride, a tetrafluoride, a di-iodide, ethylgermanium oxide, tetraethylgermanium, and the like compounds. Suitable acids for use in the impregnation solution are: inorganic acids such as hydrochloric acid, nitric acid, and the like, and strongly acidic organic acids such as oxalic acid, malonic acid, citric acid, and the like. In general, the germanium component can be impregnated either prior to, simultaneously with, or after the platinum group component is added to the carrier material. However, excellent results are obtained when the germanium component is impregnated simultaneously with the platinum group component.

A third essential constituent of the initial catalytic composite is an alkali metal or alkaline earth or alkaline metal, wherein said catalyst composition of alkaline metal or alkaline earth metal in said initial catalytic composite comprises 150 to 5000 ppm potassium. Among these alkali metals or alkaline earth metals, some preferred metals are potassium, lithium, calcium or sodium, and magnesium.

In alternative embodiments, the initial catalytic composite or intermediate catalytic composite comprises platinum, rhenium, germanium, or a mixture of rhenium and germanium, and an alkali metal or an alkaline earth metal, wherein said catalyst composition of alkaline metal or alkaline earth metal in said initial catalytic composite comprises 150 to 5000 ppm potassium. In these alternative embodiments, platinum and rhenium and/or germanium components are incorporated into the carrier material as described hereinabove. Prior to incorporation of the rhenium component, the platinum and germanium-containing composite may be oxidized at from 370° to 600°C as described hereinafter in more detail. Distilled water preferably is injected into the air stream in the oxidation step to adjust the halogen content of the composite. The halogen-content of the platinum- and germanium-containing composite should be from 0.1 to 10 mass% before addition of the rhenium component, with the preferred range being from 0.1 to 1.0 mass% halogen.

The rhenium component preferably is incorporated into the catalytic composite utilizing a soluble, decomposable rhenium compound. Rhenium compounds which may be employed include ammonium perrhenate, sodium perrhenate, potassium perrhenate, potassium rhenium oxychloride, potassium hexachlororhenate (IV), rhenium chloride, rhenium heptoxide, and the like compounds. Best results are obtained when an aqueous solution of perrhenic acid is employed in impregnation of the rhenium component.

The terminal catalytic composite has an essential absence of any alkali metal or alkaline earth metal characterized as less than 100 ppm alkali metal on an elemental basis. The platinum and rhenium and/or germanium components of the terminal catalytic composite may be composed with the refractory inorganic oxide in any manner which results in a preferably uniform distribution of these components such as coprecipitation, cogelation, coextrusion, ion exchange or impregnation. Alternatively, non-uniform distributions such as surface impregnation are within the scope of the present invention. The preferred method of preparing the catalytic composite involves the utilization of soluble decomposable compounds of platinum and rhenium for impregnation of the refractory inorganic oxide in a relatively uniform manner. For example, the platinum and rhenium components may be added to the refractory inorganic oxide by commingling the latter with an aqueous solution of chloroplatinic acid and thereafter an aqueous solution of perrhenic acid. Other water-soluble compounds or complexes of platinum and rhenium may be employed in the impregnation solutions. Typical platinum compounds include ammonium chloroplatinate, bromoplatinic acid, platinum trichloride, platinum tetrachloride hydrate, platinum dichlorocarbonyl dichloride, dinitrodiaminoplatinum, sodium tetranitroplatinate (II), etc. Decomposable rhenium compounds which may be employed include ammonium perrhenate, sodium perrhenate, potassium perrhenate, potassium rhenium oxychloride, potassium hexachlororhenate (IV), rhenium chloride, rhenium heptoxide, and the like compounds. The utilization of a platinum halogen compound, such as chloroplatinic acid, is preferred since it facilitates the incorporation of both the platinum component and at least a minor quality of the halogen component in a single step. It is further preferred that an aqueous solution of perrhenic acid be employed in impregnation of the rhenium component. A similar process is used to incorporate germanium or a mixture of rhenium and germanium into the catalyst composition as familiar to one skilled in the art.

As heretofore indicated, any procedure may be utilized in composing the platinum component and rhenium component with the refractory inorganic oxide as long as such method is sufficient to result in relatively uniform distributions of these components. Accordingly, when an impregnation step is employed, the platinum component and rhenium component may be impregnated by use of separate impregnation solutions or, as is preferred, a single impregnation solution comprising decomposable compounds of platinum component and rhenium component. In fact, excellent results are obtained with a one-step impregnation procedure using an aqueous acidic solution containing chloroplatinic acid, perrhenic acid, and hydrochloric acid to impregnate a calcined refractory inorganic oxide comprising alumina. It should be noted that irrespective of whether single or separate impregnation solutions are utilized, hydrogen chloride, nitric acid, or the like acid may be also added to the impregnation solution or solutions in order to further facilitate uniform distribution of the platinum and rhenium components throughout the refractory inorganic oxide. Additionally, it should be indicated that it is generally preferred to impregnate the refractory inorganic oxide after it has been calcined in order to minimize the risk of washing away valuable platinum and rhenium compounds; however, in some cases, it may be advantageous to impregnate refractory inorganic oxide when it is in a gelled, plastic dough or dried state. If two separate impregnations solutions are utilized in order to composite the platinum component and rhenium component with the refractory inorganic oxide, separate oxidation and reduction steps may be employed between application of the separate impregnation solutions. Additionally, halogen adjustment steps may be employed between application of the separate impregnation solutions. Such halogenation steps will facilitate incorporation of the catalytic components and halogen component into the refractory inorganic oxide.

Irrespective of its exact formation, the dispersion of platinum component and rhenium component must be sufficient so that the platinum component comprises, on an elemental basis, from 0.01 to 2 mass% of the finished catalytic composite. Additionally, there must be sufficient rhenium component present to comprise, on an elemental basis, from 0.01 to 5 mass% of the finished composite.

An additional metal promoter for the initial and terminal catalytic composite of the present invention is a tin component. This component may be present as an elemental metal, as a chemical compound such as the oxide, sulfide, halide, oxychloride, etc., or as a physical or chemical combination with the porous carrier material and/or other components of the catalytic composite. The tin component is preferably utilized in an amount sufficient to result in a final catalytic composite containing 0.01 to 5 mass% tin, calculated on an elemental basis, with best results obtained at a level of 0.1 to 2 mass%. The tin component may be incorporated in the catalytic composite in any suitable manner to achieve a uniform dispersion such as by coprecipitation of cogelation with the porous carrier material, ionexchange with the carrier material or impregnation of the carrier material at any stage in the preparation. It is to be noted that it is intended to include within the scope of the present invention all conventional methods for incorporating a tin component in a catalytic composite. One preferred method of incorporating the tin component into the catalytic composite involves coprecipitating the tin component during the preparation of the preferred refractory oxide carrier material. In the preferred case, this involves the addition of suitable soluble tin compounds such as stannous or stannic halide to the alumina hydrosol, and then combing the hydrosol with a suitable gelling agent and dropping the resulting mixture into an oil bath, etc., as explained in detail hereinbefore. Following the calcination step there is obtained a carrier material having a uniform dispersion of stannic oxide in an intimate combination with alumina. Another preferred method of incorporating the tin component into the catalyst composite involves the utilization of a soluble, decomposable compound of tin to impregnate and uniformly disperse the tin throughout the porous carrier material.

Thus, the tin component may be added to the carrier material by commingling the latter with an aqueous solution of a suitable tin salt or water-soluble compound of tin such as stannous bromide, stannous chloride, stannic chloride, stannic chloride pentahydrate, stannic chloride tetrahydrate, stannic chloride trihydrate, stannic chloride diamine, stannic trichloride bromide, stannic chromate, stannous fluoride, stannic fluoride, stannic iodide, stannic sulfate, stannic tartrate, and the like compounds. The utilization of a tin chloride compound, such as stannous or stannic chloride is particularly preferred since it facilitates the incorporation of both the tin component and at least a minor amount of the essential halogen component in a single step. In general, the tin component can be impregnated either prior to, simultaneously with, or after the other components are added to the carrier material.

Another alternative metal promoter of the terminal or intermediate catalytic composite of the present invention is a surface-impregnated metal component selected from the group consisting of rhodium, ruthenium, cobalt, nickel, iridium, and mixtures thereof. It is to be understood that as utilized herein, the term "surface-impregnated" means that at least 80% of the surface-impregnated component is located within the exterior surface of the catalyst particle. The term "exterior surface" is defined as the outermost layer of the catalyst, preferably that which comprises the exterior 50% of the catalyst volume. By the term "layer", it is meant a stratum of substantially uniform thickness.

A metal component is considered surface-impregnated when the average concentration of said metal component within the exterior surface of the catalyst is at least 4 times the average concentration of the same metal component in the remaining interior portion of the catalyst. Alternatively, a metal component is said to be surface-impregnated when the average atomic ratio of the metal component to the uniformity dispersed platinum component is at least 4 times greater in magnitude within the exterior surface of the catalyst than it is within the remaining interior portion. A catalytic composite comprising a surface-impregnated metal component is described in U.S. Pat. No. 4,677,094.

As previously stated, the surface-impregnated metal is selected from the group consisting of rhodium, ruthenium, cobalt, nickel, iridium, and mixtures thereof. The surface-impregnated metal component may be present in the composite as an elemental metal or in chemical combination with one or more of the other ingredients of the composite, or as a chemical compound of the metal such as the oxide, oxyhalide, sulfide, halide, and the like. The metal component may be utilized in the composite in any amount which is catalytically effective, with the preferred amount being 0.01 to 2 mass% thereof, calculated on an elemental metal basis. Typically, best results are obtained with 0.05 to 1 mass% surface-impregnated metal. Additionally, it is within the scope of the present invention that beneficial results may be obtained by having more than one of the above-named metals surface-impregnated on the catalyst.

The surface-impregnated component may be incorporated into the catalytic composite in any suitable manner which results in the metal component being concentrated in the exterior surface of the catalyst support in the preferred manner. In addition, it may be added at any stage of the preparation of the composite-either during preparation of the carrier material or thereafter-and the precise method of incorporation used is not deemed to be critical so long as the resulting metal component is surface-impregnated as the term is used herein. A preferred way of incorporating this component is an impregnation step wherein the porous carrier material containing uniformly dispersed platinum is impregnated with a suitable metal-containing aqueous solution. It is also preferred that no "additional" acid compounds are to be added to the impregnation solution. In a particularly preferred method of preparation the carrier material containing platinum is subjected to oxidation and halogen stripping procedures, as is explained hereinafter, prior to the impregnation of the surface-impregnated components. Aqueous solutions of water soluble, decomposable surface-impregnated metal compounds are preferred, including hexaminerhodium chloride, rhodium carbonylchloride, rhodium trichloride hydrate, ammonium pentachloroaquoruthenate, ruthenium trichloride, nickel chloride, nickel nitrate, cobaltous chloride, cobaltous nitrate, iridium trichloride, iridium tetrachloride and the like compounds.

It is contemplated in the present invention that the terminal catalytic composite may contain other metallic modifiers in addition to or instead of the aforementioned rhenium, indium, rhodium, ruthenium, cobalt, nickel, and iridium. Such modifiers are known to those or ordinary skill in the art and include but are not limited to tin, gallium, and thallium. Catalytically effective amounts of such modifiers may be incorporated into the catalyst composite in any suitable manner known to the art.

Catalyst Finishing: As heretofore indicated, it is necessary to employ at least one oxidation step in the preparation of the catalyst. The conditions employed to effect the oxidation step are selected to convert substantially all of the metallic components within the catalytic composite to their corresponding oxide form. The oxidation step typically takes place at a temperature of from 370° to 600°C. An oxygen atmosphere is employed typically comprising air. Generally, the oxidation step will be carried out for a period of from 0.5 to 10 hours or more, the exact period of time being that required to convert substantially all of the metallic components to their corresponding oxide form. This time will, of course, vary with the oxidation temperature employed and the oxygen content of the atmosphere employed.

In addition to the oxidation step, a halogen adjustment step may also be employed in preparing the catalyst. As heretofore indicated, the halogen adjustment step may serve a dual function. First, the halogen adjustment step aids in formation of the first uniform dispersion of platinum and rhenium and/or germanium components Additionally, since the catalyst of the instant invention comprises a halogen component, the halogen adjustment step can serve as a means of incorporating the desired level of halogen into the final catalytic composite. The halogen adjustment step employs a halogen or halogen-containing compound in air or an oxygen atmosphere. Since the preferred halogen for incorporation into the catalytic composite comprises chlorine, the preferred halogen or halogen-containing compound utilized during the halogen adjustment step is chlorine, HCl, or precursor of these compounds. In carrying out the halogen adjustment step, the catalytic composite is contacted with the halogen or halogen-containing compound in air or an oxygen atmosphere at an elevated temperature of from 370° to 600°C. It is further desired to have water present during the contacting step in order to aid in the adjustment. In particular, when the halogen component of the catalyst comprises chlorine, it is preferred to use a mole ratio of water to HCl of 5:1 to 100:1. The duration of the halogenation step is typically from 0.5 to 5 hours or more. Because of the similarity of conditions, the halogen adjustment step may take place during the oxidation step. Alternatively, the halogen adjustment step may be performed before or after the oxidation step as required by the particular method being employed to prepare the catalyst of the invention. Irrespective of the exact halogen adjustment step employed, the halogen content of the final catalyst should be such that there is sufficient halogen to comprise, on an elemental basis, from 0.1 to 10 mass% of the finished composite.

In an alternative embodiment, the halogen content of the initial catalytic composite is lower than that of the terminal catalytic composite. Higher C₅⁺ product selectivity has been observed, for example, when the chlorine-component content of catalysts of the present invention were adjusted in this manner. The halogen content of each catalyst may be adjusted in any suitable manner as described hereinabove.

In preparing the catalyst, it is also necessary to employ a reduction step. The reduction step is designed to reduce substantially all of the platinum component and rhenium component to the corresponding elemental metallic states and to ensure a relatively uniform and finely divided dispersion of these components throughout the refractory inorganic oxide. It is preferred that the reduction step take place in a substantially water-free environment. Preferably, the reducing gas is substantially pure, dry hydrogen (i.e., less than 20 volume ppm water). However, other reducing gases may be employed such as CO₂, nitrogen, etc. Typically, the reducing gas is contacted with the oxidized catalytic composite at conditions including a reduction temperature of from 315° to 650°C for a period of time of from 0.5 to 10 or more hours effective to reduce substantially all of the platinum component and any rhenium component to the elemental metallic state. The reduction step may be performed prior to loading the catalytic composite into the hydrocarbon conversion zone or it may be performed in situ as part of a hydrocarbon conversion process start-up procedure. However, if this latter technique is employed, proper precautions must be taken to predry the hydrocarbon conversion plant to a substantially water-free state and a substantially water-free hydrogencontaining reduction gas should be employed.

The terminal catalytic composite may be beneficially subjected to a presulfiding step designed to incorporate sufficient sulfur to comprise, on an elemental basis, from 0.05 to 0.5 mass% of the finished composite. The sulfur component may be incorporated into the catalyst by any known technique. For example, the catalytic composite may be subjected to a treatment which takes place in the presence of hydrogen in a suitable sulfur-containing compound such as hydrogen, sulfide, lower molecular weight mercaptans, organic sulfides, disulfides, etc. Typically, this procedure comprises treating the reduced catalyst with a sulfiding gas such as a mixture of hydrogen and hydrogen sulfide having 10 moles of hydrogen per mole of hydrogen sulfide at conditions sufficient to effect the desired incorporation of sulfur, generally including a temperature ranging from 10° up to 600°C or more. It is generally a good practice to perform this sulfiding step under substantially water-free conditions.

### EXAMPLES

### EXAMPLE 1: Reference Catalyst 1

A catalyst for use in Semi-Regenerative Platforming Service was prepared. The catalyst used an extruded gamma-alumina support, and contained Pt and Re at the mass concentrations of 0.25 and 0.40%, respectively. The catalyst contained 1.1% Cl. The catalyst was sulfide prior to use. Analysis of this catalyst confirmed <20 ppm of potassium was present on the catalyst.

### EXAMPLE 2: Comparator Catalyst 1

A catalyst identical to the catalyst in Example 1 was made, however 400 ppm of potassium was added to the catalyst formulation.

### EXAMPLE 3: Comparator Catalyst 2

A catalyst identical to the catalyst in Example 1 was made, however 600 ppm of potassium was added to the catalyst formulation.

### EXAMPLE 4. Catalyst Testing

The catalysts made in Examples 1, 2, and 3 were tested in a Pilot Plant designed for testing Platforming catalysts. The feed to the Pilot Plant used a commercial naphtha feed, with properties N+2A of 45 and an Endpoint of 310 °F (154.4 °C). The catalyst was loaded into the Pilot Plant in 3 different "beds", to mimic the multiple reactors that are utilized industrially for Platforming. Bed 1 was 15 cc, Bed 2 was 15 cc, and Bed 3 was 30 cc of catalyst. The conditions for the Pilot Plant runs were H2:HC=5, P=250 psig (17.2 barg), LHSV=1.5. Each catalyst test was conducted at 3 different octane levels to compare the different catalyst systems across a variety of severities. Key results are presented in Table 1 below, comparing the yield of C5+ products and the temperature of the reactor furnace that was measured at each of the three octane levels. For Run #1306, the absolute value of temperature and the wt% yield for each condition is shown. For the runs containing the comparator catalysts, the difference between the value from that test and the reference run are shown, to clarify the differences measured in the testing of the comparator catalysts.

The reference Run #1306 shows expected behavior. As severity (octane) is decreased, the catalyst temperature decreased and the C5+ yield increased.

Run #1307 shows the result from the Comparator Catalyst 1. As can be seen, this catalyst acts as a fully functioning reforming catalyst, indicating that both metallic and acidic functions are fully operating. Testing with this catalyst reveals a substantial benefit in yield at all octane levels. However, there is a significant loss in activity when this Comparator Catalyst is used in all of the reactor beds, of between 4° and 5°C. This is undesirable.

Run #1309 shows the result where this same Comparator Catalyst 1 is used in Bed 1 and Bed 2, however the reference catalyst is used in Bed 3. A substantial yield benefit is again shown. However, the loss in activity compared to the reference system is now only 1°C. This mild activity loss is considered acceptable considering the benefit in liquid C5+ product that is shown.

Run #1311 shows the result where Comparator Catalyst 2 is used in Bed 1 and Bed 2 and the reference catalyst is used in Bed 3. A substantial yield gain is again noted, with a loss in activity that is still less than Run #1309 when Comparator Catalyst 1 was used in all of the reactor beds.

This exemplifies the benefits of the instant invention, wherein a staged system with alkali metal from 0.015 to 0.15% in the front zones of the reactor system, and a substantially alkali-free catalyst is in the rear zone of the system, provides a substantial yield benefit with only a minor activity penalty.

**TABLE 1**

| Run # | R1306 | R1307 | R1309 | R1311 |
|---|---|---|---|---|
| Bed 1 Catalyst | Reference | Comparator Catalyst 1 | Comparator Catalyst 1 | Comparator Catalyst 2 |
| Bed 2 Catalyst | Reference | Comparator Catalyst 1 | Comparator Catalyst 1 | Comparator Catalyst 2 |
| Bed 3 Catalyst | Reference | Comparator Catalyst 1 | Reference | Reference |

| RONC=102.8 | | | | |
|---|---|---|---|---|
| Temp. °C | 502.7 | +3.7 | +0.9 | +2.0 |
| C5+ Yield | 73.36 | +1.73 | +0.97 | +1.09 |

| RONC=99.6 | | | | |
|---|---|---|---|---|
| Temp. °C | 490.1 | +4.4 | +1.3 | +2.6 |
| C5+ Yield | 78.37 | +1.31 | +0.87 | +0.92 |

| RONC=96.1 | | | | |
|---|---|---|---|---|
| Temp. °C | 480.5 | +4.9 | +1.4 | +2.7 |
| C5+ Yield | 82.20 | +0.94 | +0.76 | +0.78 |

### EXAMPLE 5: Catalyst Testing

The catalysts made in Examples 1 and 2, were further tested in the identical Pilot Plant discussed previously, but using a different set of test conditions. The feed to the Pilot Plant used a commercial naphtha feed, with properties N+2A of 75 and an Endpoint of 350°F (176.7°C). The conditions for the Pilot Plant runs were H2:HC=5, P=250 psig (17.2 barg), LHSV=1.5 and an octane (RONC) of 102.4. Key results are presented in Table 2 below, comparing the wt% yield of C5+ products and the temperature of the reactor furnace that was measured. For the reference run the absolute value of temperature and yield for each condition is shown (average values from several runs). For the runs containing the comparator catalyst, the difference between the value from that test and the reference run are shown, to clarify the differences measured in the testing of the comparator catalysts. Consistent with results shown in Example 4, the Run #1305 with Comparator Catalyst 1 in all reactor beds shows a significant improvement in yield, but at the cost of a substantial loss in activity. However, in the runs with the Comparator Catalyst 1 in the front 2 reactor beds and the reference catalyst in the final bed, a significant yield benefit is maintained with a much smaller activity penalty.

This exemplifies the benefits of the instant invention, wherein a staged system with alkali metal from 0.015 to 0.15% in the front zones of the reactor system, and a substantially alkali-free catalyst is in the rear zone of the system, provides a substantial yield benefit with only a minor activity penalty.

**TABLE 2**

| Run # | Several | R1305 | R1312, R1314 |
|---|---|---|---|
| Bed 1 Catalyst | Reference | Comparator Catalyst 1 | Comparator Catalyst 1 |
| Bed 2 Catalyst | Reference | Comparator Catalyst 1 | Comparator Catalyst 1 |
| Bed 3 Catalyst | Reference | Comparator Catalyst 1 | Reference |

| RONC=102.4 | | | |
|---|---|---|---|
| Temp. °C | 501.2 | +6.4 | +0.4 |
| C5+ Yield | 85.54 | +0.68 | +0.50 |

### SPECIFIC EMBODIMENTS

While the following is described in conjunction with specific embodiments, it will be understood that this description is intended to illustrate and not limit the scope of the preceding description and the appended claims.

Without further elaboration, it is believed that using the preceding description that one skilled in the art can utilize the present invention to its fullest extent and easily ascertain the essential characteristics of this invention, without departing from the and scope thereof, to make various changes and modifications of the invention and to adapt it to various usages and conditions. The preceding preferred specific embodiments are, therefore, to be construed as merely illustrative, and not limiting the remainder of the disclosure in any way whatsoever. The scope of the invention is defined by the appended claims.

In the foregoing, all temperatures are set forth in degrees Celsius and, all parts and percentages are by weight, unless otherwise indicated.

## Claims

1. A process for the catalytic reforming of hydrocarbons comprising contacting the hydrocarbon feed in two or more sequential catalyst zones, wherein:
(a) an initial catalyst zone which is a fixed-bed system and contains an initial catalytic composition comprising a platinum component, a germanium or rhenium component or a combination thereof, an alkali metal or alkaline earth metal, a halogen component, and a refractory inorganic oxide, wherein said catalyst composition of alkaline metal or alkaline earth metal in said initial catalyst zone comprises 150 to 5000 ppm potassium; and
(b) a terminal catalyst zone which is in a fixed-bed system and contains a terminal catalyst composition comprising a platinum component, a germanium or rhenium component or a combination thereof, a refractory inorganic oxide, and a halogen component; wherein said terminal catalyst composition comprises less than 100 ppm alkali metal on an elemental basis.

2. The process of claim 1 further comprising one or more middle catalyst zones with catalyst compositions comprising 100 to 1000 ppm of alkali metal or alkaline earth metal.

3. The process of claim 1 wherein said terminal catalyst composition comprises 0 to 50 wt% as much alkali metal or alkaline earth metal as said initial catalyst composition.

4. The process of claim 1 wherein the initial catalyst composition, terminal composition, or both also incorporate tin.

5. The process of claim 1 wherein said catalyst zones are operated as semiregenerative.

6. The process of claim 1 wherein said reforming process is operated at a pressure in a range of from 350 kPa to 4250 kPa (abs), a temperature in the range from 315° to 600°C.

## Patentansprüche

1. Verfahren zur katalytischen Reformierung von Kohlenwasserstoffen, umfassend das Inkontaktbringen der Kohlenwasserstoffbeschickung in zwei oder mehreren aufeinander folgenden Katalysatorzonen, wobei:
(a) eine Katalysator-Anfangszone ein Festbettsystem ist und eine katalytische Anfangszusammensetzung enthält, die eine Platinkomponente, eine Germanium- oder Rheniumkomponente oder eine Kombination derselben, ein Alkalimetall oder Erdalkalimetall, eine Halogenkomponente und ein feuerfestes organisches Oxid umfasst, wobei die Katalysatorzusammensetzung aus Alkalimetall oder Erdalkalimetall in der Katalysator-Anfangszone 150 bis 5000 ppm Kalium umfasst; und
(b) eine Katalysator-Endzone ein Festbettsystem ist und eine Katalysator-Endzusammensetzung enthält, die eine Platinkomponente, eine Germanium- oder Rheniumkomponente oder eine Kombination derselben, ein feuerfestes organisches Oxid und eine Halogenkomponente umfasst, wobei die Katalysator-Endzusammensetzung weniger als 100 ppm Alkalimetall auf Elementbasis umfasst.

2. Verfahren nach Anspruch 1, ferner umfassend eine oder mehrere Katalysator-Mittelzonen mit Katalysatorzusammensetzungen, die 100 bis 1000 ppm Alkalimetall oder Erdalkalimetall umfassen.

3. Verfahren nach Anspruch 1, wobei die Katalysator-Endzusammensetzung 0 bis 50 Gew.-% so viel Alkalimetall oder Erdalkalimetall umfasst wie die Katalysator-Anfangszusammensetzung.

4. Verfahren nach Anspruch 1, wobei die Katalysator-Anfangszusammensetzung, - Endzusammensetzung oder beide auch Zinn beinhalten.

5. Verfahren nach Anspruch 1, wobei die Katalysatorzonen semiregenerativ betrieben werden.

6. Verfahren nach Anspruch 1, wobei das Reformierungsverfahren bei einem Druck in einem Bereich von 350 kPa bis 4250 kPa (abs.) und einer Temperatur in dem Bereich von 315 °C bis 600 °C betrieben wird.

## Revendications

1. Procédé de reformage catalytique d'hydrocarbures comprenant la mise en contact de la charge d'hydrocarbures dans deux zones catalytiques séquentielles ou plus, où :
(a) une zone catalytique initiale qui est un système à lit fixe et contient une composition catalytique initiale comprenant un composant de platine, un composant de germanium ou de rhénium ou une combinaison de ceux-ci, un métal alcalin ou un métal alcalino-terreux, un composant halogène et un oxyde inorganique réfractaire, où ladite composition catalytique de métal alcalin ou de métal alcalino-terreux dans ladite zone catalytique initiale comprend de 150 à 5000 ppm de potassium; et
(b) une zone catalytique terminale qui est dans un système à lit fixe et contient une composition catalytique terminale comprenant un composant de platine, un composant de germanium ou de rhénium ou une combinaison de ceux-ci, un oxyde inorganique réfractaire et un composant halogène; où ladite composition catalytique terminale comprend moins de 100 ppm de métal alcalin sur une base élémentaire.

2. Procédé selon la revendication 1, comprenant en outre une ou plusieurs zones catalytiques médianes avec des compositions catalytiques comprenant 100 à 1000 ppm de métal alcalin ou de métal alcalino-terreux.

3. Procédé selon la revendication 1, où ladite composition catalytique terminale comprend de 0 à 50 % en poids de métal alcalin ou de métal alcalino-terreux par rapport à la composition catalytique initiale.

4. Procédé selon la revendication 1, où la composition catalytique initiale, la composition terminale ou les deux incorporent également de l'étain.

5. Procédé selon la revendication 1, où lesdites zones catalytiques sont exploitées de manière semi-régénérative.

6. Procédé selon la revendication 1, où ledit procédé de reformage est exploité à une pression comprise entre 350 kPa et 4250 kPa (abs), et à une température comprise entre 315 °C et 600 °C.
